# EUROPÄISCHE PATENTSCHRIFT

(11) **EP 1 654 293 B1**
(45) Veröffentlichungstag und Bekanntmachung des Hinweises auf die Patenterteilung: **07.10.2009**
(21) Anmeldenummer: 04763187.4
(22) Anmeldetag: 13.07.2004
(51) Int. Cl.: C08F 8/00, C08F 8/46, C08F 8/30, C08G 63/91, C09D 123/26, C09D 167/00

(54) **HYDROXYFUNKTIONELLE BINDEMITTELKOMPONENTEN**
HYDROXY-FUNCTIONAL BINDER COMPONENTS
COMPOSANTS DE LIANT A FONCTION HYDROXY

(30) Priorität: 23.07.2003 AT 11602003
(43) Veröffentlichungstag der Anmeldung: 10.05.2006
(73) Patentinhaber: Cytec Surface Specialties Austria GmbH, 8402 Werndorf (AT)
(72) Erfinder: REIDLINGER, Gerhard, A-8010 Graz (AT); BILLIANI, Johann, A-8042 Graz (AT); SCHERZ, Johannes, A-8142 Wundschuh (AT)
(74) Vertreter: Deckers, Hellmuth Alexander
(86) Internationale Anmeldenummer: PCT/EP2004/007718
(87) Internationale Veröffentlichungsnummer: WO 2005/012370

(56) Entgegenhaltungen:
- GB-A- 1 591 321

## Beschreibung

Die Erfindung betrifft hydroxyfunktionelle Bindemittelkomponenten. Sie betrifft weiter ein Verfahren zur Herstellung dieser Bindemittelkomponenten sowie die damit hergestellten Bindemittel und ihre Verwendung insbesondere zur Formulierung von Lasuren für Holz und Holzwerkstoffe.

Es ist bekannt, durch Umsetzung von Maleinsäureanhydrid mit nicht wasserlöslichen Harzen und Ölen, die olefinische Doppelbindungen enthalten in bevorzugt isolierter, also nicht konjugierter Anordnung, Addukte unter Erhaltung der Säureanhydridfunktion herzustellen. Diese Addukte können durch Umsetzung mit hydroxyfunktionellen Produkten Halbester unter Ringöffnung und Bildung einer Säuregruppe je addiertem Molekül des Maleinsäureanhydrids ergeben. Diese carboxylfunktionellen Halbester lassen sich nach zumindest teilweiser Neutralisation der Säuregruppen in Wasser emulgieren; mit diesen Emulsionen können Bindemittel formuliert werden. Die Lagerstabilität und die Trocknungseigenschaften von Lacken, Imprägniermitteln und Lasuren für Holz und Holzwerkstoffe auf Basis dieser Bindemittel sind jedoch nicht befriedigend. Aus diesem Grund werden diese Emulsionen in Kombination mit geeigneten Härtern nicht als Alleinbindemittel verwendet, sondern müssen mit anderen wasserverdünnbaren Bindemitteln gemischt werden.

Derartige Mischungen weisen jedoch unzureichende Lagerstabilität auf. Es besteht daher die Aufgabe, aus den genannten Addukten solche Stoffe zu schaffen, die durch Umsetzung mit geeigneten Reaktionspartnern zu Alleinbindemitteln für lagerstabile und schnell trocknende Lacke und Lasuren formuliert werden können. Dabei sind Hydroxylgruppen als funktionelle Gruppen bevorzugt.

Aus dem Patent GB 1 591 321 sind Harze benannt, die nach Protonierung mit Säuren wasserverdünnbar sind und die von α,β-äthylenisch ungesättigten Dicarbonsäureimiden abgeleitete Einheiten enthalten, Weitere Umsetzungsprodukte dieser Harze werden nicht beschrieben.

Die Erfindung betrifft daher hydroxyfunktionelle Bindemittelkomponenten **ABC** erhältlich durch Umsetzung von olefinisch ungesättigten Stoffen **A** mit mindestens einer olefinischen Doppelbindung und einer molaren Masse von 400 g/mol bis 6000 g/mol, bevorzugt 500 g/mol bis 5000 g/mol, ausgewählt aus Ölen, partiell verseiften oder partiell umgeesterten Ölen, niedermolekularen Alkydharzen und Oligomeren oder Polymeren von Diolefinen, olefinisch ungesättigten cyclischen Säureanhydriden **B** und Hydroxyamine **C** mit mindestens einer primären Aminogruppe und mindestens einer Hydroxylgruppe, wobei die Reste der Säureanhydride **B** durch eine Kohlenstoff-Kohlenstoff-Bindung an die Stoffe **A** gebunden sind, und wobei die Säureanhydridgruppen durch Reaktion mit den Hydroxyaminen **C** in Säureimidgruppen umgewandelt sind. Die Umsetzungsprodukte **ABC** enthalten daher eine lineare oder verzweigte Hauptkette, die eine Polymethylenstruktur -(CH₂)ₙ- oder eine Polyester-Struktur oder eine Struktur abgeleitet von Fettsäureestern des Glycerins oder anderer mehrwertiger Alkohole aufweist, sowie darauf gepfropfte cyclische Imidstrukturen, wobei das Imid-Stickstoffatom durch eine Hydroxyalkylgruppe oder eine Hydroxyalkyl-arylgruppe substituiert ist.

Die olefinisch ungesättigten Stoffe **A** enthalten mindestens eine, bevorzugt zwei oder mehr olefinische Doppelbindungen, wobei die olefinischen Doppelbindungen vorzugsweise isoliert, insbesondere also nicht konjugiert angeordnet sind. Sie sind bevorzugt ausgewählt aus Ölen, partiell verseiften Ölen oder partiell umgeesterten Ölen, wobei diese Öle eine Jodzahl von bevorzugt 100 g/g bis 220 g/g, besonders bevorzugt 120 g/g bis 210 g/g aufweisen. Unter "partiell verseift" werden hier Öle verstanden, in denen durch Verseifung mindestens eine frei Hydroxylgruppe enthalten ist. Unter "partiell umgeestert" werden Öle verstanden, die durch Reaktion mit zwei-oder mehrwertigen Alkoholen unter Umesterungsbedingungen freie Hydroxylgruppen aufweisen.

Geeignete olefinisch ungesättigte cyclische Säureanhydride **B** sind innermolekulare Anhydride von aliphatischen und cycloaliphatischen Dicarbonsäuren mit 4 bis 16 Kohlenstoffatomen und mindestens einer olefinischen Doppelbindung, insbesondere Maleinsäureanhydrid und Tetrahydrophthalsäureanhydrid.

Geeignete Hydroxyamine **C** sind aliphatische lineare, verzweigte oder cyclische Hydroxyamine mit mindestens einer Hydroxylgruppe und mindestens einer primären Aminogruppe und mindestens zwei Kohlenstoffatomen. Geeignet sind beispielsweise Äthanolamin, 3-Aminopropanol, 3- und 4-Aminobutanol, 5-Aminopentanol, 6-Aminohexanol, 4-Hydroxycyclohexylamin, 1-Amino-4-(2-hydroxyäthyl)piperazin, aromatische-aliphatische Hydroxyamine, bei denen mindestens eine Aminogruppe an einem aromatischen oder aliphatischen Kohlenstoffatom und mindestens eine Hydroxylgruppe an einem aliphatischen Kohlenstoffatom gebunden ist, wie o- und m-Aminobenzylalkohol, und Dihydroxyalkylamine wie N,N-Bis(2-hydroxyäthyl)-äthylendiamin.

Besonders bevorzugt werden als Addukte **ABC** Unsetzungsprodukte von Ölen, insbesondere Leinöl, Sojaöl, Tallöl, niedermolekularen Alkydharzen abgeleitet von Ölen und fetten Ölen durch Umesterung mit mehrwertigen Alkoholen wie Glycerin, Trimethylolpropan und Pentaerythrit oder mit mehrwertigen Säuren oder deren Anhydriden wie Phthalsäure(anhydrid), sowie Homopolymeren des Butadiens oder Isoprens oder deren Copolymeren mit Äthylen, Propylen oder 1-Buten, mit Maleinsäureanhydrid oder Tetrahydrophthalsäureanhydrid oder deren Mischungen, und Äthanolamin.

Die Hydroxylgruppen enthaltenden Addukte **ABC** können durch eine Vielzahl von weiteren Umsetzungen zu Bindemitteln für Beschichtungsmittel reagiert werden. Dabei werden die Hydroxylgruppen entweder in einer Veresterungsreaktion mit Säuregruppen enthaltenden niedermolekularen oder hochmolekularen Verbindungen **D'** oder in einer Additionsreaktion mit Isocyanatgruppen enthaltenden niedermolekularen Verbindungen **D"** umgesetzt.

Geeignete Säuregruppen enthaltende Reaktionspartner **D'** sind ausgewählt aus mehrbasigen Säuren **D1** mit mindestens zwei Säuregruppen, mit olefinisch ungesättigten Säuren gepfropften Fettsäuren **D2,** mit olefinisch ungesättigten Säuren gepfropften Ölen **D3,** und Säuregruppen enthaltenden Polymerisaten **D4** aus olefinisch ungesättigten Monomeren.

Geeignete Isocyanatgruppen enthaltende Reaktionspartner **D"** sind ausgewählt aus Umsetzungsprodukten **D5** von mehrfunktionellen Isocyanaten mit Verbindungen, die mindestens eine gegenüber Isocyanaten reaktive Gruppe sowie mindestens eine Säuregruppe aufweisen, und Addukten **D6** von mehrfunktionellen Isocyanaten mit Hydroxylgruppen enthaltenden olefinisch ungesättigten Verbindungen.

Geeignete mehrbasige Säuren **D1** sind aliphatische oder aromatische Verbindungen mit mindestens einer Carboxylgruppe und mindestens einer weiteren Säuregruppe ausgewählt aus Carboxylgruppen, Schwefel enthaltenden Säuregruppen, insbesondere Sulfonsäuregruppen -SO₃H und Sulfonsäuregruppen -SO₂H, und Phosphor enthaltenden Säuregruppen ausgewählt aus Phosphonsäuregruppen -PO₃H₂, Phosphonigsäuregruppen -PO₂H₂ und Phosphinsäuregruppen -POH₂. Es ist auch möglich, anstelle der freien Säuren ihre Anhydride einzusetzen. Besonders geeignet sind Trimellithsäure und ihr Anhydrid, sowie Sulfoisophthalsäure.

Geeignet gepfropfte Fettsäuren **D2** werden erhalten aus Fettsäuren **D21** mit 12 bis 30 Kohlenstoffatomen, die mindestens eine olefinische Doppelbindung aufweisen, und olefinisch ungesättigten Säuren **D22** mit 3 bis 8 Kohlenstoffatomen, die mindestens eine Carboxylgruppe und mindestens eine olefinische Doppelbindung aufweisen. Geeignete Fettsäuren **D21** sind Linolsäure, Linolensäure, Ölsäure, Pamitoleinsäure. Geeignete niedermolekulare ungesättigte Säuren sind Acrylsäure, Methacrylsäure, Vinylessigsäure, Maleinsäure, Tetrahydrophthalsäure, und Itaconsäure. Für die Pfropfreaktion lassen sich auch weitere copolymerisierbare olefinisch ungesättigte Monomere **D23** in Mischung mit den genannten Säuren **D22** einsetzen, wie beispielsweise Styrol, p-Methylstyrol, Methyl(meth)acrylat, Äthyl(meth)acrylat, Isobutyl(meth)acrylat und 2-Äthylhexyl(meth)acrylat.

Geeignete gepfropfte Öle **D3** sind mit Säuren **D22** und gegebenenfalls den weiteren Monomeren **D23** gepfropfte Öle **D31,** die mindestens eine olefinische Doppelbindung im Molekül enthalten. Geeignete Öle sind insbesondere Holzöl, Sojaöl und Leinöl mit Jodzahlen von 100 g/g bis 220 g/g, bevorzugt mit 120 g/g bis 210 g/g.

Geeignete saure Copolymerisate **D4** sind Copolymere von Säuren **D22,** insbesondere von Acryl- und Methacrylsäure, mit copolymerisierbaren Monomeren, ausgewählt aus Alkylestern von Säuren **D22,** insbesondere Methyl(meth)acrylat, Äthyl(meth)acrylat, Propyl(meth)acrylat, den isomeren Butyl-(meth)acrylaten sowie 2-Äthylhexyl(meth)acrylat, Hydroxyalkylestern von Säuren **D22,** insbesondere Hydroxyäthyl(meth)acrylat, Hydroxypropyl(meth)acrylat und Hydroxybutyl(meth)acrylat, Styrol, Vinyltoluol, sowie p-Methylstyrol. Besonders bevorzugt werden Copolymerisate von (Meth)Acrylsäure, Methyl(meth)acrylat, (Iso-)Butyl(meth)acrylat, 2-Äthylhexyl(meth)acrylat, Hydroxyäthyl(meth)acrylat und (p-Methyl-)Styrol.

Geeignete Addukte **D5** von Isocyanaten mit Verbindungen, die eine Säurefunktion und mindestens eine gegenüber Isocyanaten reaktive Gruppe aufweisen, sind Hydroxysäuren **D51,** sowie Aminosäuren **D52** und Mercaptosäuren **D53** mit mindestens difunktionellen Isocyanaten **D54,** insbesondere Diisocyanaten, die aromatisch oder aliphatisch sind und insbesondere ausgewählt sind aus Toluylendiisocyanat, Tetramethylxylylendiisocyanat, Bis(4-isocyanatophenyl)methan, Hexamethylendiisocyanat, Isophorondiisocyanat, Trimethylhexandiisocyanat, sowie die von diesen Isocyanaten abgeleiteten Allophanate, Isocyanurate, Biurete und Uretdione. Bevorzugt wiesen die Hydroxy-, Amino- und Mercaptosäuren sterisch gehinderte Säuregruppen auf, also solche, die nicht oder nur langsam mit Isocyanaten unter Zersetzung und Kohlendioxidentwicklung reagieren.

Geeignete Addukte **D6** sind Reaktionsprodukte von mehrfunktionellen Isocyanaten **D61** mit olefinisch ungesättigten Monomeren, die mit Isocyanaten reaktive Gruppen wie Hydroxylgruppen, Mercaptangruppen oder Aminogruppen enthalten. Geeignete Verbindungen sind insbesondere Hydroxyalkylester der unter **D22** genannten Säuren wie Hydroxyäthyl- und Hydroxypropyl-(meth)acrylat.

Die Umsetzung mit niedermolekularen Säuren **D'** erfolgt unter Kondensationsbedingungen und Molekülvergrößerung, wobei ein Polyester aus Addukten **ABC** mit mindestens zwei Hydroxylgruppen und niedermolekularen Säuren **D'** mit ebenfalls mindestens zwei Säuregruppen gebildet wird. Dabei ist die Menge der Edukte **D'** und **ABC** so zu wählen, daß ein Überschuß von Säuren **D'** eingesetzt wird, wodurch Kondensationsprodukte mit einer Säurezahl von ca. 10 mg/g bis ca. 100 mg/g, bevorzugt 20 mg/g bis 80 mg/g hergestellt werden.

Bei der Umsetzung mit Säuregruppen enthaltenden hochmolekularen Verbindungen **D'** mit Säurezahlen von 10 mg/g bis 50 mg/g beobachtet man nur eine geringe Abnahme der Säurezahl während der Kondensation, während jedoch eine Probe der noch unreagierten Reaktionsmischung aus dem Addukt **ABC** und der hochmolekularen Säuregruppen enthaltenden Verbindung **D'** beim Verdünnen in der 10fachen Masse an Wasser keine homogen Mischung ergibt, wird nach Kondensation während ca. 8 Stunden die Reaktionsmischung wasserverdünnbar, es zeigt sich bei der mit Wasser verdünnten kondensierten Reaktionsmischung auch nach Stehenlassen über 24 Stunden bei Raumtemperatur (23 °C) keine Phasentrennung.

Durch Umsetzen mit den Isocyanatgruppen und Säuregruppen enthaltenden Verbindungen **D5** werden Produkte gebildet, die Säuregruppen anstelle der Hydroxylgruppen aufweisen und die insbesondere als Additive zu anderen wasserverdünnbaren Bindemitteln zur Erhöhung von deren Festkörper-Massenanteil geeignet sind. Bei der Umsetzung mit Verbindungen **D5,** die zwei Isocyanatgruppen und eine Säuregruppe enthalten, wie beispielsweise den Umsetzungsprodukten von Dimethylolpropionsäure oder Dimethylolessigsäure mit bevorzugt aliphatischen Diisocyanaten oder Umsetzungsprodukten von Monohydroxysäuren mit Triisocyanaten wie den Isocyanuraten der oben genannten Diisocyanate erhält man Reaktionsprodukte, die zwei Reste der Addukte **ABC** und eine Säuregruppe enthalten, und die bereits als Alleinbindemittel oder als Zumischharz zu anderen Bindemitteln eingesetzt werden können.

Die Umsetzung schließlich von den Addukten **ABC** mit den Reaktionsprodukten **D6** von Diisocyanaten und Hydroxyalkylestern von olefinisch ungesättigten Säuren führt zu Stoffen, die als Bindemittel in strahlenhärtbaren Beschichtungsmitteln eingesetzt werden können und die sich durch niedrige Viskosität und hohe Reaktivität auszeichnen.

Die Erfindung wird durch die folgenden Beispiele erläutert:

### Beispiele

### Beispiel 1 Säuregruppenhaltiges Harz 1

700 g Tallölfettsäure, 92 g Glycerin und 0,8 g Triphenylphosphit wurden in einen Reaktor gefüllt und auf 230 °C geheizt. Durch Zugabe von 25 g Xylol wurde das Reaktionswasser azeotrop abdestilliert, das vom Wasser getrennte Xylol wurde im Kreis geführt. Es wurde ca. fünf Stunden bei dieser Temperatur unter Wasserabtrennung verestert, bis die Säurezahl des Reaktionsgemisches auf weniger als 2 mg/g gefallen war.

Nach Zugabe von 30 g Phthalsäureanhydrid wurde weitere drei Stunden unter Abtrennung des Reaktionswassers bis zu einer Säurezahl unter 6 mg/g verestert. Dann wurde das Xylol durch Destillation unter vermindertem Druck entfernt.

Es wurde ein flüssiges Harz erhalten mit den folgenden Daten:

| | |
|---|---|
| Festkörpermassenanteil: | 99,2 % |
| Säurezahl: | 4,7 mg/g |
| Dynamische Viskosität: (23 °C, 100 s⁻¹) | 128 mPa·s |

### Beispiel 2 Maleinsäure-gepfropftes Öl

500 g Sojaöl und 100 g Maleinsäureanhydrid wurden in einen Reaktor gefüllt und durch aufeinanderfolgende Zyklen von Evakuieren und Überlagern mit Inertgas von Luftsauerstoff befreit. Unter einem Inertgasschleier wurde auf 140 °C aufgeheizt, dann wurde in weiteren zwei Stunden die Temperatur auf 210 °C gesteigert. Die Reaktionsmischung wurde bei dieser Temperatur ca. drei Stunden gehalten, bis die Adduktbildung abgeschlossen war. Es ließ sich kein freies Maleinsäureanhydrid mehr nachweisen. Es wurde ein flüssiges Harz mit den folgenden Daten erhalten:

| | |
|---|---|
| Festkörpermassenanteil: | 99,1 % |
| Säurezahl: | 92,2 mg/g (bestimmt als Halbester) |
| Dynamische Viskosität: (23 °C, 25 s⁻¹) | 4750 mPa·s |

### Beispiel 3 mit (sauren) Vinylmonomeren gepfropfte Fettsäure

71 g Leinölfettsäure wurden in eine Reaktor gefüllt und auf 140 °C geheizt. Eine Mischung bestehend aus den Monomeren Isobutylmethacrylat (55 g), p-Methylstyrol (10 g) und Methacrylsäure (35 g) wurde gleichmäßig innerhalb von ca 7,5 Stunden zugetropft, gleichzeitig wurden 4 g Di-tert.-butylperoxid zugegeben. Nach beendeter Zugabe wurde die Reaktionsmischung bei 140 °C weiter gerührt, bis sich aus dem gemessenen Festkörpermassenanteil ein Umsatz von mehr als 95 % ergab. Durch Zugabe von weiterem Peroxid ließ sich beim Wiederholungsversuch die Reaktion beschleunigen. Durch Anlegen eines Unterdrucks (ca. 100 hPa =100 mbar) bei der Reaktionstemperatur ließen sich innerhalb von ca. 20 Minuten die Restmonomeren nahezu quantitativ entfernen. Die abgekühlte Reaktionsmischung wurde mit Xylol verdünnt. Es ergab sich eine Harzlösung mit den folgenden Daten:

| | |
|---|---|
| Festkörpermassenanteil: | 85 % |
| Säurezahl: | 200 mg/g |

### Beispiel 4 mit Hydroxyamin umgesetztes Addukt aus Beispiel 2

600 g des Harzes aus Beispiel 2 und 165 gXylol wurden in einen Reaktor gefüllt. Innerhalb von zehn Minuten wurden 61 g Äthanolamin unter Rühren zugesetzt, durch die exotherme Realtion steigt die Temperatur bis auf ca. 85 °C. Nach Abklingen der Exothermie wurde weiter bis auf 160 °C geheizt, das Reaktionswasser wird durch azeotrope Destillation mit dem Xylol, Phasentrennung und Rückführung des Xylols ausgekreist. Es wurde weitere drei Stunden bei 160 °C gehalten, bis an einer der Reaktionsmischung entnommenen Probe eine Säurezahl von weniger als 10 mg/g gemessen wurde. Das verbliebene Xylol wurde durch Destillation unter vermindertem Druck entfernt. Es ergab sich ein Harz mit den folgenden Daten:

| | |
|---|---|
| Festkörpermassenanteil: | 99,4 % |
| Säurezahl: | 7 mg/g |

### Beispiel 5 Kondensationsprodukt des Addukts ABC aus Beispiel 4 mit einer gepfropften Fettsäure aus Beispiel 3

643 g des Harzes aus Beispiel 4 und 588 g des Harzes aus Beispiel 3 wurden in einen Reaktor gefüllt und auf 190 °C geheizt. Das bei der Veresterung gebildete Reaktionswasser wurde gemeinsam mit dem Xylol der Harzlösung aus Beispiel 3 azeotrop abdestilliert; das abgetrennte Xylol wurde dabei in die Reaktionsmischung zurückgeführt. Die Kondensation wurde ca. zwei Stunden weitergeführt, bis an einer entnommenen Probe ein Staudinger-Index von 7 cm³/g bestimmt wurde. Anschließend wurde das verbliebene Xylol unter vermindertem Druck abdestilliert. Es ergab sich ein Harz mit den folgenden Daten:

| | |
|---|---|
| Festkörpermassenanteil: | 99,3 % |
| Säurezahl: | 62,5 mg/g |
| Staudinger-Index: | 7,5 cm³/g |

Der Reaktor wurde dann abgekühlt und der Inhalt wurde ab einer Temperatur von 95 °C durch Zugabe einer wäßrigen Ammoniaklösung (25 g NH₃ in 100 g der Lösung) und von 1640 g destilliertem Wasser unter Rühren emulgiert. An der erhaltenen Emulsion wurden die folgenden Werte bestimmt:

| | |
|---|---|
| Festkörpermassenanteil | 40 % |
| Säurezahl: | 68 mg/g |
| pH-Wert * | 8,15 |
| Dynamische Viskosität: (23 °C, 10 s⁻¹) | 10 Pa·s |
| mittlere Teilchengröße | 36,5 nm |

| | |
|---|---|
| * Messung nach Verdünnung auf einen Festkörpermassenanteil von 10 % in wäßriger Lösung | |

Mit dieser Emulsion ließ sich ein Klarlack formulieren, der beim Aufstreichen auf Holz eine glänzende Beschichtung mit guter Anfeuerung der Holzmaserung ergab.

### Beispiel 6 Kondensationsprodukt des Harzes aus Beispiel 4 mit einer niedermolekularen Säure

643 g des Harzes aus Beispiel 4 und 135 g Trimellithsäureanhydrid wurden in einen Reaktor gefüllt und auf 160 °C geheizt. Durch Addition des Anhydrids und partielle Veresterung stieg der Staudinger-Index (gemessen in Chloroform bei 23 °C) an entnommenen Proben innerhalb von zweieinhalb Stunden auf 8,5 cm³/g an. Als dieser Wert erreicht war, wurde abgekühlt und durch Zusatz einer Mischung von 58 g einer wäßrigen Ammoniaklösung (25 g in 100 g der Lösung) und 1310 g destillierten Wassers unter Rühren emulgiert. An dieser Harzemulsion wurden die folgenden Werte bestimmt:

| | |
|---|---|
| Festkörpermassenanteil: | 36 % |
| Säurezahl: | 88 mg/g |
| pH-Wert * | 8,25 |
| Dynamische Viskosität: (23 °C, 10 s⁻¹) | 7,55 Pa·s |
| mittlere Teilchengröße | 67 nm |

| | |
|---|---|
| * Messung wie oben | |

Mit dieser Emulsion ließ sich ein Klarlack formulieren, der beim Aufstreichen auf Holz eine glänzende Beschichtung mit guter Anfeuerung der Holzmaserung ergab.

## Patentansprüche

1. Verwendung von hydroxyfunktionellen Addukten **ABC** erhältlich durch Umsetzung von olefinisch ungesättigten Stoffen **A** mit mindestens einer olefinischen Doppelbindung und einer molaren Masse von 400 g/mol bis 6000 g/mol, olefinisch ungesättigten cyclischen Säureanhydride **B** und Hydroxyamine **C** mit mindestens einer primären Aminogruppe und mindestens einer Hydroxylgruppe, wobei die Reste der Säureanhydride **B** durch eine Kohlenstoff-Kohlenstoff-Bindung an die Stoffe **A** gebunden sind, und wobei die Säureanhydridgruppen durch Reaktion mit den Hydroxyaminen C in Säureimidgruppen umgewandelt sind, zur Herstellung von Bindemittelkomponenten **ABCD** durch Umsetzung mit einer Komponente **D** ausgewählt aus Säuregruppen enthaltenden niedermolekularen oder hochmolekularen Verbindungen **D'** und Verbindungen **D",** die entweder mindestens eine Isocyanatgruppe und mindestens eine Säuregruppe oder mindestens eine Isocyanatgruppe und mindestens eine olefinisch ungesättigte Gruppe enthalten, unter Bildung einer Urethanstruktur, einer Harnstoff-Struktur oder einer Thiourethanstruktur, wobei die Reaktionsprodukte **ABCD** im Fall der Umsetzung mit **D"** entweder mindestens eine Säuregruppe oder mindestens eine olefinisch ungesättigte Gruppe pro Molekül enthalten.

2. Bindemittelkomponenten **ABCD** erhältlich durch Umsetzung einer Komponente **D** ausgewählt aus Säuregruppen enthaltenden niedermolekularen oder hochmolekularen Verbindungen **D'** und Verbindungen **D",** die entweder mindestens eine Isocyanatgruppe und mindestens eine Säuregruppe oder mindestens eine Isocyanatgruppe und mindestens eine olefinisch ungesättigte Gruppe enthalten, unter Bildung einer Urethanstruktur, einer Harnstoff-Struktur oder einer Thiourethanstruktur, mit hydroxyfunktionellen Addukten **ABC** erhältlich durch Umsetzung von olefinisch ungesättigten Stoffen **A** mit mindestens einer olefinischen Doppelbindung und einer molaren Masse von 400 g/mol bis 6000 g/mol, olefinisch ungesättigten cyclischen Säureanhydriden **B** und Hydroxyaminen **C** mit mindestens einer primären Aminogruppe und mindestens einer Hydroxylgruppe, wobei die Reste der Säureanhydride **B** durch eine Kohlenstoff-Kohlenstoff-Bindung an die Stoffe **A** gebunden sind, und wobei die Säureanhydridgruppen durch Reaktion mit den Hydroxyaminen C in Säureimidgruppen umgewandelt sind, wobei die Reaktionsprodukte **ABCD** im Fall der Umsetzung mit **D"** entweder mindestens eine Säuregruppe oder mindestens eine olefinisch ungesättigte Gruppe pro Molekül enthalten.

3. Verwendung nach Anspruch 1, **dadurch gekennzeichnet, daß** die olefinisch ungesättigten Stoffe A ausgewählt sind aus Ölen, partiell verseiften oder partiell umgeesterten Ölen, niedermolekularen Alkydharzen und Oligomeren oder Polymeren von Diolefinen.

4. Verwendung nach Anspruch 1, **dadurch gekennzeichnet, daß** die olefinisch ungesättigten cyclischen Säureanhydride **B** innermolekulare Anhydride sind von aliphatischen und cycloaliphatischen Dicarbonsäure mit 4 bis 16 Kohlenstoffatomen und mindestens eine olefinische Doppelbindung enthalten.

5. Verwendung nach Anspruch 1, **dadurch gekennzeichnet, daß** die Hydroxyamine C aromatische, aliphatische oder aliphatische lineare, verzweigte oder cyclische Hydroxyamine sind mit mindestens einer Hydroxylgruppe und mindestens einer primären Aminogruppe und mindestens zwei Kohlenstoffatomen.

6. Verwendung nach Anspruch 1, **dadurch gekennzeichnet, daß** zur Synthese der hydroxyfunktionellen Addukte **ABC** olefinisch ungesättigte Stoffe **A** mit mindestens einer olefinischen Doppelbindung und einer molaren Masse von 400 g/mol bis 6000 g/mol mit olefinisch ungesättigten cyclischen Säureanhydriden **B** zu einem über Kohlenstoff-Kohlenstoff-Bindungen verknüpften Addukt umgesetzt werden, das mit Hydroxyaminen **C** mit mindestens einer primären Aminogruppe und mindestens einer Hydroxylgruppe umgesetzt wird unter Umwandlung der Säureanhydridgruppen durch Reaktion mit den Hydroxyaminen **C** in Säureimidgruppen.

7. Bindemittelkomponenten **ABCD** nach Anspruch 2, **dadurch gekennzeichet, daß** die Umsetzung mit einer Verbindung **ID'** erfolgt und daß sie mindestens eine Säuregruppe pro Molekül enthalten.

8. Bindemittelkomponenten **ABCD** nach Anspruch 2, **dadurch gekennzeichnet, daß** die Umsetzung mit einer Verbindung **D"** ausgewählt aus Verbindungen mit mindestens einer Isocyanatgruppe und mindestens einer Säuregruppe und Verbindungen mit mindestens einer Isocyanatgruppe und mindestens einer olefinisch ungesättigten Gruppe durch Bildung einer Urethanstruktur, einer Harnstoff-Struktur oder einer Thiourethanstruktur erfolgt, wobei die Bindemittelkomponenten **ABCD** entweder mindestens eine Säuregruppe oder mindestens eine olefinisch ungesättigte Gruppe pro Molekül enthalten.

9. Verwendung nach Anspruch 1, **dadurch gekennzeichnet, daß** die mit den Verbindungen **D'** modifizierten Umsetzungsprodukte **ABCD** als Bindemittel für Lacke eingesetzt werden.

10. Verwendung nach Anspruch 1, **dadurch gekennzeichnet, daß** die mit den Verbindungen **D"** modifizierten Umsetzungsprodukte **ABCD** als Bindemittel für Lacke eingesetzt werden.

## Claims

1. The use of hydroxy-functional adducts **ABC** obtainable by reaction of olefinically unsaturated compounds **A** having at least one olefinic double bond and a molar mass of 400 g/mol to 6000 g/mol, olefinically unsaturated cyclic acid anhydrides **B,** and hydroxyamines C having at least one primary amino group and at least one hydroxyl group, the radicals of the acid anhydrides **B** being attached to the compounds **A** by a carbon-carbon bond, and the acid anhydride groups being converted, by reaction with the hydroxyamines **C,** into acid imide groups, for preparing binder components **ABCD** by reaction with a component **D,** selected from acid-group-containing, low-molecular-mass or high-molecular-mass compounds **D'** and compounds **D"** which contain either at least one isocyanate group and at least one acid group or at least one isocyanate group and at least one olefinically unsaturated group, to form a urethane structure, a urea structure or a thiourethane structure, the reaction products **ABCD,** in the case of reaction with **D",** containing either at least one acid group or at least one olefinically unsaturated group per molecule.

2. Binder components **ABCD** obtainable by reaction of a component **D** selected from acid-group-containing low-molecular-mass or high-molecular-mass compounds **D'** and compounds **D"** which contain either at least one isocyanate group and at least one acid group or at least one isocyanate group and at least one olefinically unsaturated group, to form a urethane structure, a urea structure or a thiourethane structure, with hydroxy-functional adducts **ABC** obtainable by reaction of olefinically unsaturated compounds **A** having at least one olefinic double bond and a molar mass of 400 g/mol to 6000 g/mol, olefinically unsaturated cyclic acid anhydrides **B,** and hydroxyamines **C** having at least one primary amino group and at least one hydroxyl group, the radicals of the acid anhydride **B** being attached to the compounds **A** by a carbon-carbon bond, and the acid anhydride groups being converted, by reaction with the hydroxyamines **C,** into acid imide groups, the reaction products **ABCD,** in the case of reaction with **D",** containing either at least one acid group or at least one olefinically unsaturated group per molecule.

3. The use as claimed in claim 1, wherein the olefinically unsaturated compounds **A** are selected from oils, partially saponified or partially transesterified oils, low-molecular-mass alkyd resins, and oligomers or polymers of diolefins.

4. The use as claimed in claim 1, wherein the olefinically unsaturated cyclic acid anhydrides **B** are intramolecular anhydrides of aliphatic and cycloaliphatic dicarboxylic acids having 4 to 16 carbon atoms and contain at least one olefinic double bond.

5. The use as claimed in claim 1, wherein the hydroxyamines C are aromatic, aliphatic or araliphatic linear, branched or cyclic hydroxyamines having at least one hydroxyl group and at least one primary amino group and at least two carbon atoms.

6. The use as claimed in claim 1, wherein the hydroxy-functional adducts **ABC** are synthesized by reaction of olefinically unsaturated compounds **A** having at least one olefinic double bond and a molar mass of 400 g/mol to 6000 g/mol with olefinically unsaturated cyclic acid anhydrides **B** to give an adduct linked via carbon-carbon bonds, which is reacted with hydroxyamines **C** having at least one primary amino group and at least one hydroxyl group, with conversion of the acid anhydride groups, by reaction with the hydroxyamines **C** into acid imide groups.

7. The binder components **ABCD** as claimed in claim 2, wherein the reaction takes place with a compound **D',** and wherein they contain at least one acid group per molecule.

8. The binder components **ABCD** as claimed in claim 2, wherein the reaction takes place with a compound **D"** selected from compounds having at least one isocyanate group and at least one acid group and compounds having at least one isocyanate group and at least one olefinically unsaturated group, by formation of a urethane structure, a urea structure or a thiourethane structure, the binder components **ABCD** containing either at least one acid group or at least one olefinically unsaturated group per molecule.

9. The use as claimed in claim 1, wherein the reaction products **ABCD** modified with the compounds **D'** are used as binders for coating materials.

10. The use as claimed in claim 1, wherein the reaction products **ABCD** modified with the compounds **D"** are used as binders for coating materials.

## Revendications

1. Utilisation d'adduits **ABC** à fonctionnalité hydroxy pouvant être obtenus par conversion de substances **A** oléfiniquement insaturées comportant au moins une double liaison oléfinique et présentant une masse molaire de 400 g/mol à 6000 g/mol, d'anhydrides d'acides cycliques **B** oléfiniquement insaturés et d'hydroxylamines **C** avec au moins un groupe amino primaire et au moins un groupe hydroxyle, les radicaux des anhydrides d'acide **B** étant liés par une liaison carbone - carbone aux substances **A** et les groupes anhydrides d'acide étant convertis par réaction avec les hydroxylamines **C** en groupes imides d'acides, pour produire des composants de liant **ABCD** par conversion avec un composant **D** choisi dans le groupe des acides contenant des composés **D'** et des composés **D"** de basse masse molaire ou de haute masse molaire, qui contiennent soit au moins un groupe isocyanate et au moins un groupe acide soit au moins un groupe isocyanate et au moins un groupe oléfiniquement insaturé, en formant une structure uréthane, une structure urée ou une structure thio-urée, les produits réactionnels **ABCD,** dans le cas de la conversion avec **D"** contenant soit au moins un groupe acide, soit au moins un groupe oléfiniquement insaturé par molécule.

2. Composants de liants **ABCD** pouvant être obtenus par conversion d'un composant **D** choisi dans des groupes d'acides contenant des composés **D'** et des composés **D"** de basse masse molaire ou de haute masse molaire qui contiennent soit au moins un groupe isocyanate et au moins un groupe acide, soit au moins un groupe isocyanate et au moins un groupe oléfiniquement insaturé, en formant une structure uréthane, une structure urée ou une structure thio-urée, avec des adduits **ABC** à fonctionnalité hydroxy pouvant être obtenus par conversion de substances **A** oléfiniquement insaturées comportant au moins une double liaison oléfinique et présentant une masse molaire de 400 g/mol à 6000 g/mol, d'anhydrides d'acides cycliques **B** oléfiniquement insaturés et d'hydroxylamines **C** comportant au moins un groupe amino primaire et au moins un groupe hydroxyle, les radicaux des anhydrides d'acide **B** étant liés par une liaison carbone - carbone aux substances **A,** et les groupes d'anhydrides d'acide étant convertis par réaction avec les hydroxylamines C en groupes imides d'acide, les produits réactionnels **ABCD** contenant, dans le cas de la conversion avec **D",** soit au moins un groupe acide, soit au moins un groupe oléfiniquement insaturé par molécule.

3. Utilisation selon la revendication 1, **caractérisée en ce que** les substances **A** oléfiniquement insaturées sont choisies parmi les huiles, les huiles partiellement saponifiées ou partiellement transestérifiées, des résines alkyde de basse masse molaire et des oligomères ou des polymères de dioléfines.

4. Utilisation selon la revendication 1, **caractérisée en ce que** les anhydrides d'acide cycliques **B** oléfiniquement insaturés sont des anhydrides intramoléculaires d'acides dicarboxyliques aliphatiques et cycloaliphatiques comportant 4 à 16 atomes de carbone et contenant au moins une double liaison oléfinique.

5. Utilisation selon la revendication 1, **caractérisée en ce que** les hydroxylamines C sont des hydroxylamines aromatiques, aliphatiques ou linéaires, ramifiés ou cycliques aliphatiques comportant au moins un groupe hydroxyle et au moins un groupe amino primaire et au moins deux atomes de carbone.

6. Utilisation selon la revendication 1, **caractérisée en ce que** pour la synthèse des adduits **ABC** à fonctionnalité hydroxy, on convertit des substances **A** oléfiniquement insaturées comportant au moins une double liaison oléfinique et présentant une masse molaire de 400 g/mol à 6000 g/mol avec des anhydrides d'acide cycliques **B** oléfiniquement insaturés en un adduit relié par des liaisons carbone - carbone qui est converti avec des hydroxylamines **C** comportant au moins un groupe amino primaire et au moins un groupe hydroxyle par conversion des groupes d'anhydrides d'acide par réaction avec les hydroxylamines **C** en groupes imides d'acide.

7. Composants de liant **ABCD** selon la revendication 2, **caractérisés en ce que** la conversion s'effectue avec un composé **D'** et qu'ils contiennent au moins un groupe acide par molécule.

8. Composants de liant **ABCD** selon la revendication 2, **caractérisés en ce que** la conversion s'effectue avec un composé **D'** choisi parmi les composés comportant au moins un groupe isocyanate et au moins un groupe acide et des composés comportant au moins un groupe isocyanate et au moins un groupe oléfiniquement insaturé en formant une structure uréthane, une structure urée ou une structure thio-uréthane, les composants du liant **ABCD** contenant au moins un groupe acide ou au moins un groupe oléfiniquement insaturé par molécule.

9. Utilisation selon la revendication 1, **caractérisée en ce que** les produits de conversion **ABCD** modifiés avec les composés **D'** sont utilisés comme liants pour laques.

10. Utilisation selon la revendication 1, **caractérisée en ce que** les produits de conversion **ABCD** modifiés avec les composés **D"** sont utilisés comme liants pour laques.
